# EUROPEAN PATENT APPLICATION

(11) **EP 2 814 245 A1**
(43) Date of publication of application: **17.12.2014**
(21) Application number: 13747317.9
(22) Date of filing: 16.01.2013
(51) Int. Cl.: H04N 7/173, H04N 7/167

(54) **TRANSMISSION DEVICE, TRANSMISSION METHOD, RECEPTION DEVICE, RECEPTION METHOD, PROGRAM, AND ELECTRONIC DEVICE**

(30) Priority: 07.02.2012 JP 2012024454
(71) Applicant: Sony Corporation, Tokyo 108-0075 (JP)
(72) Inventor: SEKINE, Kazutoyo, Tokyo 108-0075 (JP); SATO, Masahiko, Tokyo 108-0075 (JP); IKEDA, Tamotsu, Tokyo 108-0075 (JP)
(74) Representative: Witte, Weller & Partner Patentanwälte mbB
(86) International application number: PCT/JP2013/050700
(87) International publication number: WO 2013/118545

(57) **Abstract**

Provided is a transmitting apparatus including a stream input unit that inputs a transport stream containing PID data packets of a plurality of service channels in a time-division manner, an information addition unit that adds a time stamp corresponding to a time of the input to PID packets remaining after the PID data packets of the service channels that are not selected of the input transport stream are removed, and a stream transmitting unit that successively transmits each of the PID packets to which the time stamp is added to an external device.

## Description

### Technical Field

The present technology relates to a transmitting apparatus, a transmitting method, a receiving apparatus, a receiving method, a program, and an electronic device, and in particular, relates to a transmitting apparatus or the like capable of efficiently transmitting each packet contained in a transport stream to an external device.

### Background Art

In the CI_Plus standard v1.3.1 released in January 2011, a function to perform de-scramble processing of a plurality of receiving channels simultaneously is not available and a viewer cannot record a program simultaneously while viewing another program. As a precedent of standardizing the function other than CI_Plus, the M-Card system of the US Open Cable standard is known and operated.

In the M-Card system, MPEG-TS signals received by two tuners in a host device such as a TV set or a set-top box are fully multiplexed on the time axis to realize output from the host device to a CAM module having a de-scramble function without changing a conventional physical interface.

Limitations of the system include the fact that the bit rate of the multiplexed MPEG-TS signal at least doubles due to multiplexing. The upper limit bit rate of the MPEG-TS signal is 96 Mbps and 192 Mbps, which is double the bit rate thereof, is the upper limit of the practicable bit rate. Therefore, multiplexing of three MPEG-TS signals or more does not function.

To solve the above problem, for example, the technology described in Patent Literature 1 is proposed. According to the technology, only necessary PID packets are selected for multiplexing by matching to channel selection information of the host device from two MPEG-TS signals or more and SI/PSI information of PMT (Program Map Table) and the like is corrected by matching to the extracted service channel ID number.

An advantage of the technology described in Patent Literature 1 is that an MPEG-TS stream after multiplexing can be received not only by a newly designed CAM module corresponding to the expanded function, but also by an existing CAM module.

### Citation List

### Patent Literature

Patent Literature 1: US 7394834B

### Summary of Invention

### Technical Problem

In the technology described in Patent Literature 1 described above, the following problem is expected when the technology is realized.

In the current standard, which service channel in an MPEG-TS stream received by the CAM module from the host device to de-scramble is decided by a method by which the PID number of the service channel selected by the host device is added to a CA_PMT table after the CA_PMT table being created and the CA_PMT table is output to the CAM module.

Detailed information EMM (Entitlement Management Message), ECM (Entitlement Control Message) necessary for de-scrambling is exchanged between a sending apparatus and the CAM module. Thus, the host device mediating the MPEG-TS signal does not know the location of EMM and ECM data. This is one element that maintains the security strength of CI_Plus.

On the other hand, the aforementioned exchange means that the host device cannot grasp a list of PID packet numbers containing data needed by the host device for de-scrambling. Therefore, when, as described above, the SI/PSI information is corrected, there remains a possibility of causing a problem that de-scrambling is not performed by the CAM module.

An object of the present technology is to effectively perform transmission of a transport stream to an external device.

### Solution to Problem

According to an aspect of the present technology, there is provided a transmitting apparatus including a stream input unit that inputs a transport stream containing PID data packets of a plurality of service channels in a time-division manner, an information addition unit that adds a time stamp corresponding to a time of the input to PID packets remaining after the PID data packets of the service channels that are not selected of the input transport stream are removed, and a stream transmitting unit that successively transmits each of the PID packets to which the time stamp is added to an external device.

According to the present technology, a transport stream containing PID packets of a plurality of service channels in a time-division manner is input by a stream input unit. A time stamp corresponding to a time of input is added to PID packets remaining after PID data packets (PID video packets, PID audio packets and the like) of the service channels that are not selected (tuned) of the transport stream are removed by an information addition unit. Then, each of the PID packets to which the time stamp is added is successively transmitted to an external device by a stream transmitting unit.

For example, the stream transmitting unit may also be caused to transmit each PID packet to the external device via a digital interface. In this case, for example, the digital interface may be a DVB-CI common interface and the external device may be a conditional access module that performs de-scramble processing.

According to the present technology, as described above, only PID packets remaining after PID data packets of service channels that are not selected (tuned) from among PID packets of a plurality of service channels contained in the transport stream are removed are transmitted and so the transmission bit rate can be reduced to a low level. Also, a time stamp corresponding to the input time is added the PID packet to be transmitted and, for example, each PID packet returned from an external device can be returned to the original time position in accordance with the added time stamp to reconfigure a transport stream and also PCR (Program Clock Reference) in each PID packet can correctly be brought back to a correct state.

In the present technology, for example, the stream transmitting unit may decide the clock rate needed for continuous transmission from the total amount of data of PID packets to which the time stamp is added so that each PID packet is continuously transmitted to the external device. By performing such continuous transmission of PID packets, the operation of a synchronizing system of a receiving circuit in the external device can be stabilized.

Also in the present technology, when each PID packet is transmitted to the external device, for example, the stream transmitting unit may be caused to further transmit service channel information of the PID packet to the external device. Accordingly, when PID packets remaining after PID data packets of non-selected service channels are removed are transmitted, the external device can correctly recognize packets of which service channels are transmitted without SI/PSI information being corrected.

Also in the present technology, for example, the stream input unit may be caused to input a plurality of transport streams, the information addition unit may be caused to add a stream identifier that identifies the corresponding transport stream and a time stamp corresponding to the time of input to PID packets remaining after PID data packets of service channels that are not selected (tuned) of each of the plurality of input transport streams, and the stream transmitting unit may be caused to successively transmit each PID packet to which the stream identifier and time stamp are added to the external device. The PID packet transmitted in this manner has, in addition to the time stamp corresponding to the input time, stream identification information added thereto and therefore, each PID packet returned from the external device can easily be distributed to each stream and the reconfiguration of the plurality of transport streams is facilitated.

According to another aspect of the present technology, there is provided a receiving apparatus including a stream receiving unit that successively receives each PID packet to which a time stamp indicating an original time position in a transport stream is added from an external device, and a stream reconfiguration unit that reconfigures the transport stream by arranging each of the received PID packets in a time position in accordance with the added time stamp.

According to the present technology, each PID packet to which a time stamp indicating an original time position in a transport stream is successively received by a stream receiving unit. Then, the transport stream is reconfigured by each PID packet being arranged in a time position in accordance with the time stamp added to each PID packet by a stream reconfiguration unit. For example, the stream receiving unit may also be caused to receive each PID packet from the external device via a digital interface. In this case, for example, the digital interface may be a DVB-CI common interface and the external device may be a conditional access module that performs de-scramble processing.

According to the present technology, the transport stream is reconfigured by arranging each received PID packet in the time position in accordance with the added time stamp and the transport stream in which PCR in each PID packet is brought back to its correct position can correctly be obtained.

In the present technology, for example, the stream reconfiguration unit may be caused to further insert a pseudo-PID packet distinguished from a PID packet by a packet identifier (PID) into a time position where no PID packet of the reconfigured transport stream is present. By inserting a pseudo-PID packet in this manner, the reconfigured transport stream has continuous PID packets and the operation of a synchronizing system of a receiving circuit of the reconfigured transport stream can be stabilized.

Also in the present technology, the stream receiving unit may be caused to successively receive each PID packet to which the stream identifier that identifies the corresponding transport stream and the time stamp are added from the external device and the stream reconfiguration unit may be caused to reconfigure a plurality of transport streams by distributing each PID packet to each stream in accordance with the added stream identifier and arranging each PID packet in the time position in accordance with the added time stamp in each stream.

In this case, the received PID packet has, in addition to the time stamp indicating the original time position in the transport stream, stream identification information added thereto and each PID packet is distributed to each stream based on the stream identification information and therefore, even if PID packets received successively form a combination of PID packets of a plurality of transport streams, each transport stream can easily be reconfigured.

According to another aspect of the present technology, there is provided
an electronic device including:
a transmitting apparatus; and
a receiving apparatus,
wherein the transmitting apparatus includes
a stream input unit that inputs a plurality of transport streams,
an information addition unit that adds, to PID packets remaining after PID data packets of service channels that are not selected (tuned) of each of the plurality of transport streams that have been input are removed, a stream identifier that identifies the corresponding transport stream and a time stamp corresponding to a time of the input, and
a stream transmitting unit that transmits each of the PID packets to which the stream identifier and the time stamp are added to an external device via a digital interface, and
wherein the receiving apparatus includes
a stream receiving unit that successively receives each of the PID packets to which the stream identifier and the time stamp are added from the external device, and
wherein a stream reconfiguration unit that reconfigures the plurality of transport streams by distributing each of the received PID packets to each stream in accordance with the added stream identifier and arranging each of the PID packets in a time position in accordance with the time stamp added in the each stream.

### Advantageous Effects of Invention

According to the present technology, transmission of a transport stream to an external device can effectively be performed.

### Brief Description of Drawings

[FIG. 1] FIG. 1 is a block diagram showing a configuration example of a receiving system of digital broadcasting as an embodiment.
[FIG. 2] FIG. 2 is a block diagram showing a detailed configuration example of a common interface controller constituting the receiving system.
[FIG. 3] FIG. 3 is a diagram showing a configuration example of PID packets of transport streams that are each fetched by an input buffer and an example of PID packets that are not unnecessary after PID data packets other than those of the selected (tuned) service channel are removed.
[FIG. 4] FIG. 4 is a diagram showing an example of PID packets that are not unnecessary of each transport stream held in a dual port memory and to which TS ID and a time stamp are added, an example of a stream obtained by combining such PID packets, and an example of each packet continuously transmitted to a CAM module.
[FIG. 5] FIG. 5 is a diagram showing an example of each PID packet contained in a stream received by a TS re-construct buffer.
[FIG. 6] FIG. 6 is a diagram showing an example of each transport stream reconfigured by a PID timing adjuster and an example of transport streams output finally after pseudo-PID packets being inserted.
[FIG. 7] FIG. 7 is a flow chart showing an example of a processing procedure of the common interface controller for transmitting PID packets of each transport stream as a stream by combining such PID packets to the CAM module.
[FIG. 8] FIG. 8 is a diagram showing an example of the processing procedure of the common interface controller for receiving combined PID packets of each transport stream from the CAM module.

### Description of Embodiments

Forms (hereinafter, called "embodiments") to carry out the invention will be described below. The description will be provided in the order shown below:
1. First Embodiment
2. Modification

### <1. First Embodiment>

### [Configuration example of a digital broadcasting receiving system]

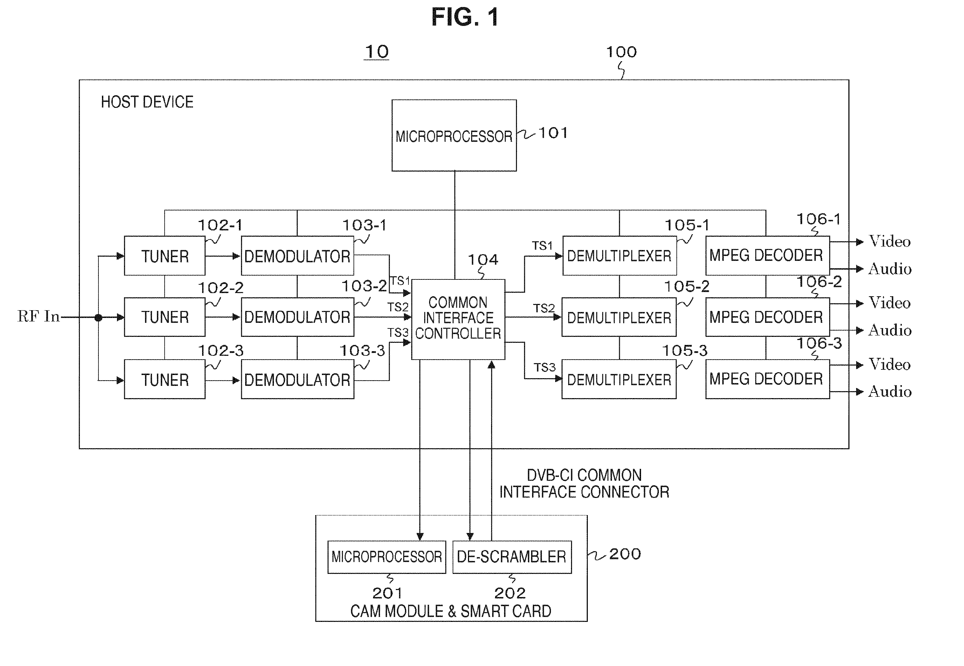

FIG. 1 shows a configuration example of a receiving system 10 of digital broadcasting as an embodiment. The receiving system 10 includes a host device 100 and a CAM module 200. The host device 100 is a TV set, a set-top box or the like.

The host device 100 has a microprocessor 101, tuners 102-1, 102-2, 102-3, and demodulators 103-1, 103-2, 103-3. The host device 100 also has a common interface controller 104 and demultiplexers 105-1, 105-2, 105-3. Further, the host device 100 has MPEG decoders 106-1, 106-2, 106-3.

The microprocessor 101 controls the operation of each unit of the host device 100. The tuners 102-1, 102-2, 102-3 receive RF modulating signals of transport streams TS1, TS2, TS3 transmitted from a broadcasting station respectively. Then, the tuners 102-1, 102-2, 102-3 down-convert the RF modulating signals to an intermediate frequency and output for input into the demodulators 103-1, 103-2, 103-3 respectively. The demodulators 103-1, 103-2, 103-3 demodulate IF modulating signals down-converted to the intermediate frequency to obtain the transport streams TS1, TS2, TS3 in the base band respectively.

The common interface controller 104 exchanges with, that is, performs transmission/reception to/from a CAM module 200 the transport streams TS1, TS2, TS3 obtained by the demodulators 103-1, 103-2, 103-3 respectively. The common interface controller 104 and the CAM module 200 are connected by a DVB-CI common interface.

Each transport stream contains PID packets of a plurality of service channels in a time-division manner. The common interface controller 104 exchanges PID packets after removing PID data packets of service channels that are not selected (tuned) from each transport stream. Accordingly, the transmission bit rate is reduced. A detailed configuration of the common interface controller 104 will further be described later.

The demultiplexers 105-1, 105-2, 105-3 extract PID data packets of the selected (tuned) service channel from the transport streams TS1, TS2, TS3 obtained by the common interface controller 104 respectively. The PID data packets are video or audio PID data packets. The MPEG decoders 106-1, 106-2, 106-3 decode elementary streams constituted of PID data packets extracted by the demultiplexers 105-1, 105-2, 105-3 to obtain video data and audio data respectively.

The CAM module 200 is an attachment device fitted into a DVB-CI common interface connector of the host device 100 to perform de-scramble processing. The CAM module 200 is used by a card (Smartcard) such as a magnetic card, an IC card or the like in which subscriber information, contract period information and the like are recorded being inserted.

The CAM module 200 has a microprocessor 201 and a de-scrambler 202. The CAM module 200 receives a PID packet transmitted from the common interface controller 104 of the host device 100 through the DVB-CI common interface and performs de-scramble processing thereon. Then, the CAM module 200 transmits each PID packet to the common interface controller 104 of the host device 100.

The operation of the receiving system 10 shown in FIG. 1 will briefly be described. RF modulating signals of the transport streams TS1, TS2, TS3 transmitted from a broadcasting station are received by the tuners 102-1, 102-2, 102-3 respectively. Then, the RF modulating signals down-converted to an intermediate frequency by the tuners 102-1, 102-2, 102-3 are supplied to the demodulators 103-1, 103-2, 103-3 respectively. In the demodulators 103-1, 103-2, 103-3, IF modulating signals down-converted to the intermediate frequency are demodulated to obtain the transport streams TS1, TS2, TS3 in the base band respectively. The transport streams TS1, TS2, TS3 are supplied to the common interface controller 104.

In the common interface controller 104, PID packets of the transport streams TS1, TS2, TS3 supplied from the demodulators 103-1, 103-2, 103-3 are combined. Then, each of the combined PID packets is transmitted from the common interface controller 104 to the CAM module 200 via the DVB-CI common interface. In this case, PID data packets of service channels that are not selected (tuned) are removed from each transport stream.

In the CAM module 200, a PID packet transmitted from the common interface controller 104 of the host device 100 via the DVB-CI common interface is received and de-scramble processing is performed thereon. Then, each PID packet is transmitted from the CAM module 200 to the common interface controller 104 of the host device 100 via the DVB-CI common interface.

In the common interface controller 104, a PID packet transmitted from the CAM module 200 is received via the DVB-CI common interface. Then, in the common interface controller 104, each PID packet is distributed to the respective stream to reconfigure the transport streams TS1, TS2, TS3. The reconfigured transport streams TS1, TS2, TS3 are supplied to the demultiplexers 105-1, 105-2, 105-3 respectively.

In the demultiplexers 105-1, 105-2, 105-3, PID data packets of the selected (tuned) service channel are extracted from the transport streams TS1, TS2, TS3 supplied by the common interface controller 104 respectively. Video and audio PID data packets extracted by the demultiplexers 105-1, 105-2, 105-3 are supplied to the MPEG decoders 106-1, 106-2, 106-3 respectively.

In the MPEG decoders 106-1, 106-2, 106-3, demodulation processing is performed on video and audio elementary streams constituted of video and audio PID data packets respectively. Then, the respective video data and audio data of the selected (tuned) service channel are output from the MPEG decoders 106-1, 106-2, 106-3.

### [Detailed configuration example of the common interface controller]

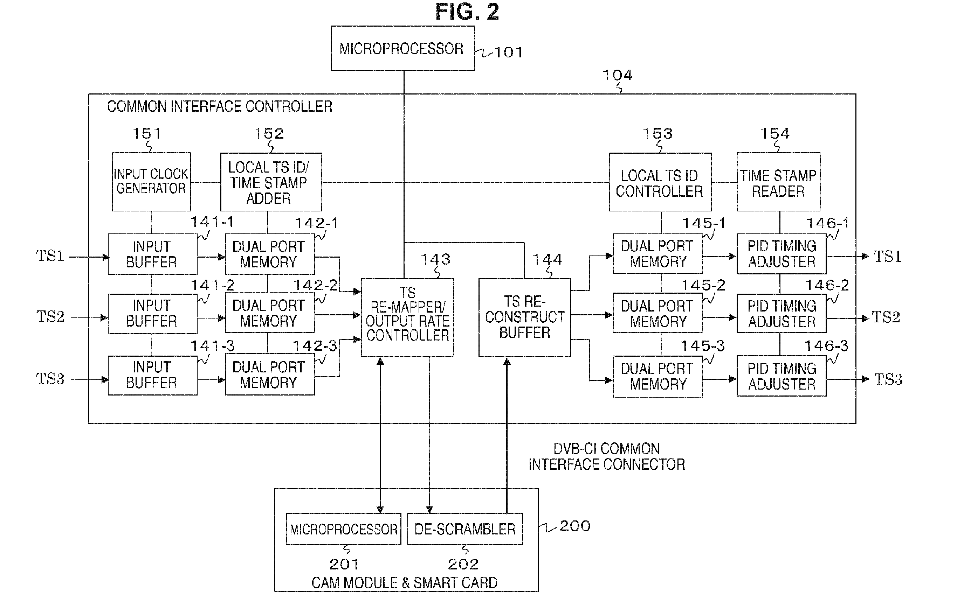

Next, a detailed configuration of the common interface controller 104 will be described. FIG. 2 shows a detailed configuration of the common interface controller 104. The controller 104 has input buffers 141-1, 141-2, 141-3 and dual port memories 142-1, 142-2, 142-3. The controller 104 also has a TS re-mapper/output rate controller 143 and a TS re-construct buffer 144.

In addition, the controller 104 has dual port memories 145-1, 145-2, 145-3 and PID timing adjusters 146-1, 146-2, 146-3. The controller 104 also has an input clock generator 151 and a local TS ID/time stamp adder 152. Further, the controller 104 has a local TS ID controller 153 and a time stamp reader 154.

The input buffers 141-1, 141-2, 141-3 temporarily store the input transport streams TS1, TS2, TS3 respectively. The relative time of a PID packet of each transport stream incorporated into these input buffers 141-1, 141-2, 141-3 can be managed by storing the count value of the clock generated by the input clock generator 151.

The local TS ID/time stamp adder 152 adds TS ID and a time stamp by using the dual port memories 142-1, 142-2, 142-3. In this case, the local TS ID/time stamp adder 152 adds TS ID and a time stamp to PID packets remaining after PID data packets of service channels that are not selected (tuned) of the transport streams TS1, TS2, TS3 are removed. Incidentally, TS ID is a stream identifier to identify the transport stream to which the PID packet corresponds. The time stamp is time information corresponding to the time when the PID packet is input into the input buffer and, for example, the count value of the clock generated by the input clock generator 151 is used.

The TS re-mapper/output rate controller 143 successively reads PID packets to which TS ID and the time stamp are added in chronological order from the dual port memories 142-1, 142-2, 142-3 to combine these PID packets into one stream. Then, the TS re-mapper/output rate controller 143 successively transmits each PID packet of the transport streams TS1, TS2, TS3 contained in the stream to the CAM module 200 via the DVB-CI common interface.

In this case, the TS re-mapper/output rate controller 143 decides the clock rate needed for continuous transmission from the total amount of data to continuously transmit each packet to the CAM module 200. By performing such continuous transmission, the operation of a synchronizing system of a receiving circuit in the CAM module 200 can be stabilized.

The TS re-mapper/output rate controller 143 also transmits, corresponding to transmission of each PID packet to the CAM module 200, stream information and service channel information of the PID packet. The stream information indicates to which transport stream the PID packet belongs and the service channel information indicates to which service channel the PID packet belongs.

By transmitting stream information and service channel information of each PID packet to match transmission of the PID packet in this manner, the following effect can be achieved. That is, the CAM module 200 can correctly recognize PID packets of which service channel are transmitted without making corrections of SI/PSI information accompanying processing to remove unnecessary PID data packets.

The TS re-construct buffer 144 successively receives and temporarily stores each PID packet of the transport streams TS1, TS2, TS3 from the CAM module 200 via the DVB-CI common interface. Each PID packet has, as described above, TS ID and the time stamp added thereto.

The local TS ID controller 153 distributes each PID packet stored in the TS re-construct buffer 144 to one of the transport streams TS1, TS2, TS3 in accordance with TS ID added thereto. Then, the local TS ID controller 153 writes PID packets distributed to each transport stream to the respective dual port memories 145-1, 145-2, 145-3.

The time stamp reader 154 reads the time stamp added to each PID packet written into the dual port memories 145-1, 145-2, 145-3. The PID timing adjusters 146-1, 146-2, 146-3 reconfigure and output the transport streams TS1, TS2, TS3 based on the reading result of the time stamp described above respectively. That is, the PID timing adjusters 146-1, 146-2, 146-3 read and output each PID packet written into the dual port memories 145-1, 145-2, 145-3 so as to be arranged in the time position in accordance with the time stamp added thereto.

In this case, the PID timing adjusters 146-1, 146-2, 146-3 insert a pseudo-PID packet having a different PID from that of a PID packet into the time position where the PID packet is not present of the reconfigured transport streams TS1, TS2, TS3 respectively. In the pseudo-PID packet, a payload portion has random data in which the "0" value and the "1" value are not consecutive inserted thereinto. By inserting the pseudo-PID packet, the reconfigured transport streams TS1, TS2, TS3 have continuous PID packets and the operation of a synchronizing system of a receiving circuit of the reconfigured transport streams S1, TS2, TS3 can be stabilized.

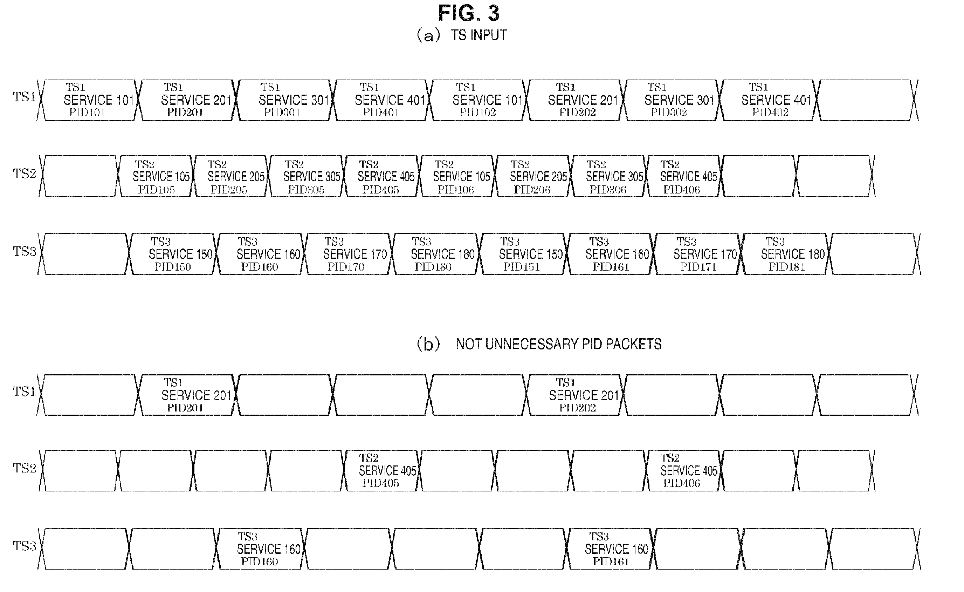

Next, the operation of the common interface controller 104 shown in FIG. 2 will be described. The transport streams TS1, TS2, TS3 supplied from the demodulators 103-1, 103-2, 103-4 (see FIG. 1) are temporarily stored after being supplied to the input buffers 141-1, 141-2, 141-3 respectively. The relative time of a PID packet of each transport stream incorporated into these input buffers 141-1, 141-2, 141-3 is managed by the count value of the clock generated by the input clock generator 151 being stored. FIG. 3(a) shows a configuration example of PID packets of the transport streams TS1, TS2, TS3 incorporated into the input buffers 141-1, 141-2, 141-3 respectively.

The dual port memories 142-1, 142-2, 142-3 are used by the local TS ID/time stamp adder 152 to add TS ID and a time stamp. In this case, TS ID and a time stamp are added to PID packets remaining (not unnecessary PID packets) after PID data packets of service channels that are not selected (tuned) of the transport streams TS1, TS2, TS3 are removed. Incidentally, TS ID is a stream identifier to identify the transport stream to which the PID packet corresponds. The time stamp is time information corresponding to the time when the PID packet is input into the input buffer and, for example, the count value of the clock generated by the input clock generator 151 is used.

PID packets to which TS ID and the time stamp are added of the transport streams TS1, TS2, TS3 are held in the dual port memories 142-1, 142-2, 142-3 respectively. FIG. 3(b) shows an example of PID packets that are not unnecessary of the transport streams TS1, TS2, TS3 to the input in FIG. 3(a).

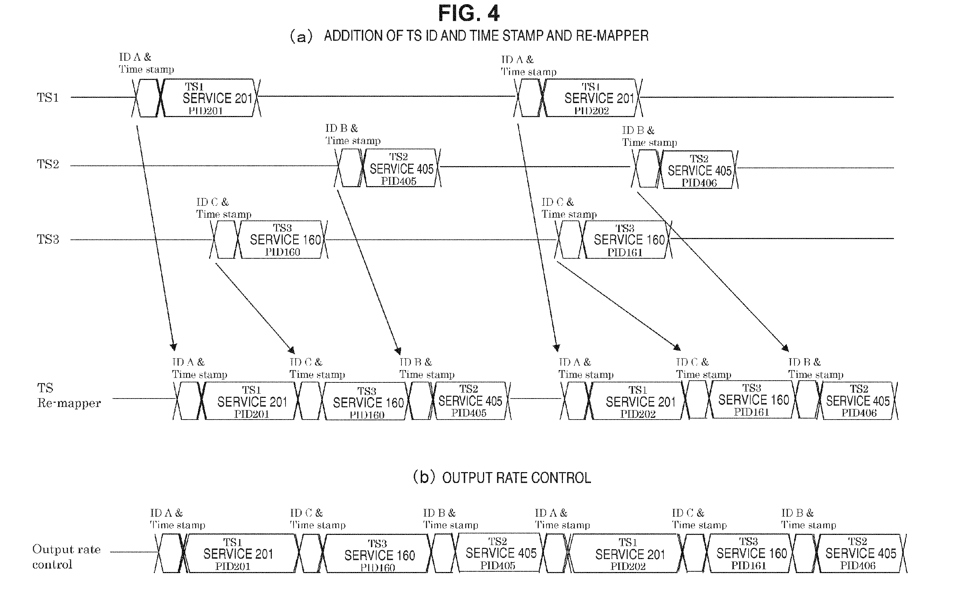

In the TS re-mapper/output rate controller 143, PID packets to which TS ID and the time stamp are added in each transport stream are combined into one stream. In this case, PID packets are combined by PID packets to which TS ID and the time stamp are added in each transport stream being read in chronological order from the dual port memories 142-1, 142-2, 142-3. FIG. 4(a) shows an example of not unnecessary PID packets of each transport stream which are held in the dual port memories 142-1, 142-2, 142-3 and to which TS ID and the time stamp are added. FIG. 4(a) also shows an example of a stream obtained by a combination formed by the TS re-mapper/output rate controller 143.

Then, each packet of the one combined stream is successively transmitted from the TS re-mapper/output rate controller 143 to the CAM module 200 via the DVB-CI common interface. In this case, the clock rate needed for continuous transmission is decided by the TS re-mapper/output rate controller 143 from the total amount of data to continuously transmit each packet to the CAM module 200. FIG. 4(b) shows an example of each packet continuously transmitted to the CAM module 200 as described above.

Also, corresponding to transmission of each PID packet to the CAM module 200, stream information and service channel information are transmitted from the TS re-mapper/output rate controller 143 to the CAM module 200 via the DVB-CI common interface. The stream information indicates to which transport stream the PID packet belongs and the service channel information indicates to which service channel the PID packet belongs.

In the TS re-construct buffer 144, each PID packet of the transport streams TS1, TS2, TS3 is successively received from the CAM module 200 via the DVB-CI common interface. Then, each PID packet stored in the TS re-construct buffer 144 is distributed to one of the transport streams TS1, TS2, TS3 in accordance with TS ID added thereto by the local TS ID controller 153. Then, distributed PID packets are written into the respective dual port memories 145-1, 145-2, 145-3.

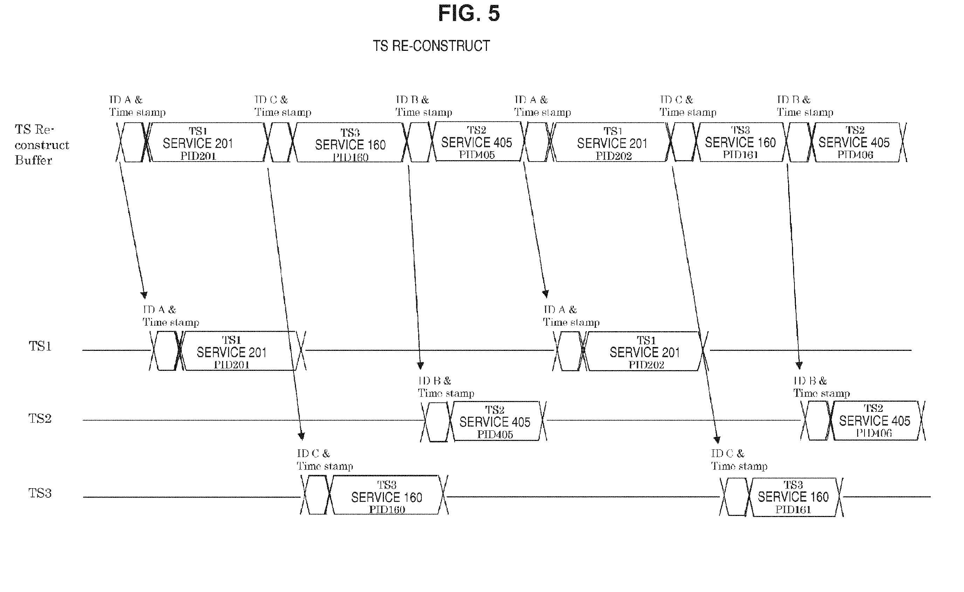

FIG. 5 shows an example of each PID packet of the transport streams TS1, TS2, TS3 contained in a stream received by the TS re-construct buffer 144. FIG. 5 also shows a state in which each PID packet contained in this one stream is distributed to each of the transport streams TS1, TS2, TS3.

In the time stamp reader 154, the time stamp added to each PID packet written into the respective dual port memories 145-1, 145-2, 145-3 is read. In the PID timing adjusters 146-1, 146-2, 146-3, the transport streams TS1, TS2, TS3 are reconfigured based on the reading result. That is, in the PID timing adjusters 146-1, 146-2, 146-3, each PID packet written into the dual port memories 145-1, 145-2, 145-3 is read out so as to be arranged in the time position in accordance with the time stamp added thereto. Accordingly, the reconfigured transport streams TS1, TS2, TS3 are output from the PID timing adjusters 146-1, 146-2, 146-3 respectively.

In this case, in the PID timing adjusters 146-1, 146-2, 146-3, a pseudo-PID packet having a different PID from that of a PID packet is inserted into the time position where the PID packet is not present of the reconfigured transport streams TS1, TS2, TS3 respectively. The pseudo-PID packet has random data in which the "0" value and the "1" value are not consecutive inserted into a payload portion. The transport streams TS1, TS2, TS3 reconfigured by the PID timing adjusters 146-1, 146-2, 146-3 as described above respectively are output by the common interface controller 104.

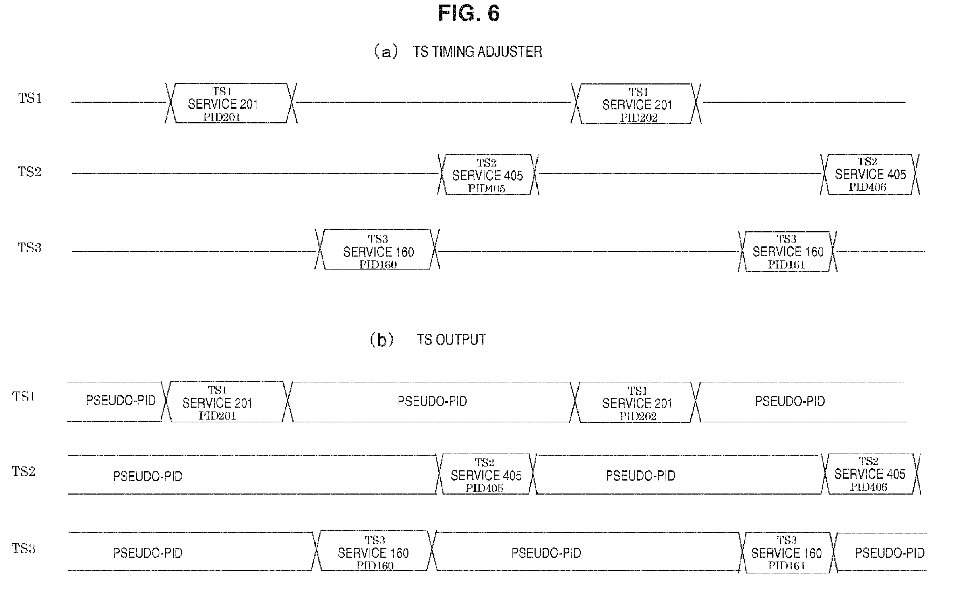

FIG. 6(a) shows an example of the transport streams TS1, TS2, TS3 reconfigured by the PID timing adjusters 146-1, 146-2, 146-3 respectively. Then, FIG. 6(b) shows an example of the transport streams TS1, TS2, TS3 output from the PID timing adjusters 146-1, 146-2, 146-3 in the end after pseudo-PID packets being inserted.

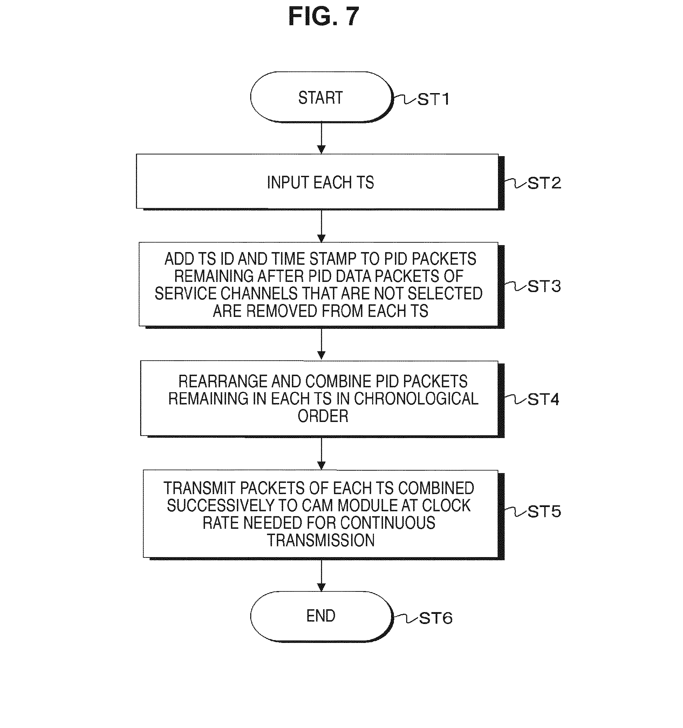

The flow chart in FIG. 7 shows an example of the processing procedure when the common interface controller 104 combines each PID packet of the transport streams TS1, TS2, TS3 and transmits combined PID packets as a stream to the CAM module 200.

In step ST1, the common interface controller 104 starts processing and then proceeds to processing in step ST2. In step ST2, the common interface controller 104 inputs the transport streams TS1, TS2, TS3.

Next, in step ST3, the common interface controller 104 removes PID data packets of service channels that are not selected (tuned) of each transport stream. Then, in step ST3, the common interface controller 104 further adds TS ID as a stream identifier and a time stamp corresponding to the input time to the head of remaining PID packets (not unnecessary PID packets).

Next, in step ST4, the common interface controller 104 rearranges and combines remaining PID packets of each transport stream in chronological order. Then, in step ST5, the common interface controller 104 successively transmits each of the combined PID packets to the CAM module 200 at a clock rate needed for continuous transmission. After the processing in step ST5, in step ST6, the common interface controller 104 terminates the processing.

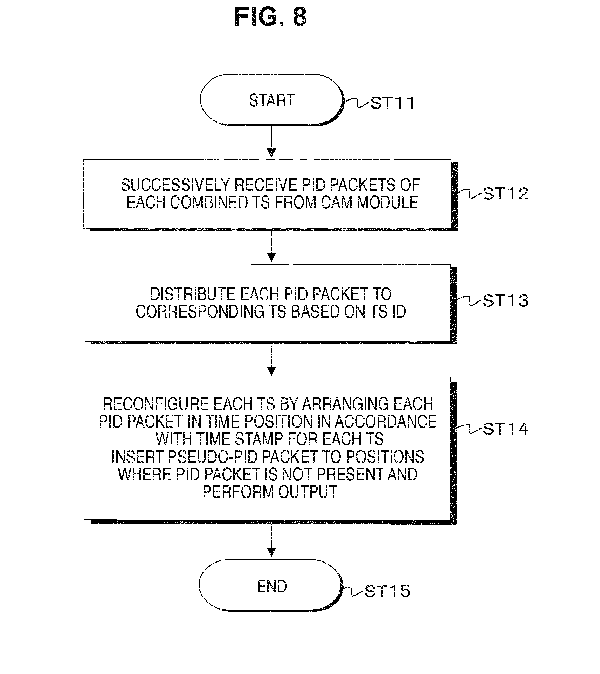

The flow chart in FIG. 8 shows an example of the processing procedure when the common interface controller 104 receives each of combined PID packets of the transport streams TS1, TS2, TS3 from the CAM module 200.

In step ST11, the common interface controller 104 starts processing and then proceeds to processing in step ST12. In step ST12, the common interface controller 104 successively receives each of combined PID packets of the transport streams TS1, TS2, TS3 from the CAM module 200.

Next, in step ST13, the common interface controller 104 distributes each PID packet to one of the transport streams TS1, TS2, TS3 based on the added TS ID as a stream identifier.

Next, in step ST14, the common interface controller 104 arranges the time position of each distributed PID packet to the time position in accordance with the added time stamp for each transport stream. Accordingly, the common interface controller 104 reconfigures the transport streams TS1, TS2, TS3. Also, in step ST14, the common interface controller 104 further inserts a pseudo-PID packet to a position where no PID packet is present in each transport stream and outputs each transport stream. After the processing in step ST14, in step ST15, the common interface controller 104 terminates the processing.

The common interface controller 104 performs transmission processing shown in the above flow chart of FIG. 7 and reception processing shown in the above flow chart of FIG. 8 in parallel and repeats the processing periodically.

In the receiving system 10 shown in FIG. 1, as described above, only PID packets remaining after PID data packets of service channels that are not selected (tuned) being removed are transmitted/received (exchanged) between the host device 100 and the CAM module 200. That is, not all PID data packets of a plurality of service channels contained in the transport streams TS1, TS2, TS3 are transmitted to the CAM module 200.

Thus, even if a plurality of transport streams is handled, PID packets can be exchanged between the host device 100 and the CAM module 200 via the current physical interface of CI_Plus at a bit rate allowing leeway for transmission. Also in this case, only PID data packets of service channels that are not selected (tuned) are removed and thus, stability of the system can be secured without erroneously removing hidden data that is not released in the current CI_Plus standard and is necessary for de-scrambling. In addition, the bit rate of stream data passing through the current physical interface is decreased and thus, the noise level of radiation can be reduced.

In the receiving system 10 shown in FIG. 1, TS ID and a time stamp are added to each PID packet of the transport streams TS1, TS2, TS3 transmitted/received between the host device 100 and the CAM module 200. The time stamp includes time information corresponding to the input time of the common interface controller 104 and TS ID constitutes a stream identifier.

In the host device 100, therefore, each PID packet returned from the CAM module 200 can easily be distributed to each stream based on the added TS ID. Also in the host device 100, PCR in each PID packet can correctly be brought back to the correct state by arranging each PID packet in the original time position in accordance with the added time stamp for each stream. Accordingly, the transport streams TS1, TS2, TS3 can easily be reconfigured.

Also in the receiving system 10 shown in FIG. 1, when each PID packet is successively transmitted from the host device 100 to the CAM module 200, stream identification information and service channel information of the PID packet are transmitted to the CAM module 200. Therefore, PID packets of which service channel are transmitted can correctly be recognized by the CAM module 200 without corrections of SI/PSI information being made accompanying processing to remove unnecessary PID data packets and de-scramble processing can appropriately be performed.

Also in the receiving system 10 shown in FIG. 1, when each PID packet is transmitted from the host device 100 to the CAM module 200, the clock rate needed for continuous transmission is decided from the total amount of data to continuously transmit each PID packet. Therefore, the operation of the synchronizing system of the receiving circuit in the CAM module 200 can be stabilized.

Also in the receiving system 10 shown in FIG. 1, each PID packet received from the CAM module 200 is distributed to one of streams and arranged in the time position in accordance with the time stamp in the host device 100 to reconfigure each transport stream. In this case, a pseudo-PID packet having a different PID from that of a PID packet is inserted into the time position where the PID packet is not present of the reconfigured transport streams TS1, TS2, TS3. Therefore, the reconfigured transport streams TS1, TS2, TS3 have continuous PID packets and the operation of the synchronizing system of the receiving circuit of the reconfigured transport streams S1, TS2, TS3 can be stabilized.

### <2. Modification>

In the above embodiment, the host device 100 has the three tuners 102-1, 102-2, 102-3 to handle the three transport streams TS1, TS2, TS3. The present technology can also be applied similarly when one, two, four or more transport streams are handled. When one transport stream is handled, only a time stamp needs to be added to a PID packet transmitted from the host device 100 to the CAM module 200 and the need of addition of TS ID as a stream identifier is eliminated.

Also in the above embodiment, an example in which each PID packet of transport streams is transmitted from the host device 100 to the CAM module 200 connected by the DVB-CI common interface is shown. However, the present technology can naturally be applied similarly when each PID packet of such transport streams is transmitted to other external devices wirelessly or by wire.

Additionally, the present technology may also be configured as below.
(1)
   A transmitting apparatus including:
   a stream input unit that inputs a transport stream containing PID data packets of a plurality of service channels in a time-division manner;
   an information addition unit that adds a time stamp corresponding to a time of the input to PID packets remaining after the PID data packets of the service channels that are not selected of the transport stream are removed; and
   a stream transmitting unit that successively transmits each of the PID packets to which the time stamp is added to an external device.
(2)
   The transmitting apparatus according to (1),
   wherein the stream transmitting unit decides a clock rate needed for continuous transmission from a total amount of data of the PID packets to which the time stamp is added to continuously transmit each of the PID packets to the external device.
(3)
   The transmitting apparatus according to (1) or (2),
   wherein the stream transmitting unit further transmits, when transmitting each of the PID packets to the external device, service channel information of the PID packet to the external device.
(4)
   The transmitting apparatus according to any one of (1) to (3),
   wherein the stream transmitting unit transmits each of the PID packets to the external device via a digital interface.
(5)
   The transmitting apparatus according to (4),
   wherein the digital interface is a DVB-CI common interface, and
   wherein the external device is a conditional access module that performs de-scramble processing.
(6)
   The transmitting apparatus according to any one of (1) to (5),
   wherein the stream input unit inputs a plurality of the transport streams,
   wherein the information addition unit adds, to the PID packets remaining after the PID data packets of the service channels that are not selected are removed of each of the plurality of transport streams that have been input, a stream identifier that identifies the corresponding transport stream and the time stamp corresponding to the time of the input, and
   wherein the stream transmitting unit successively transmits each of the PID packets to which the stream identifier and the time stamp are added to the external device.
(7) A transmitting method including:
   inputting a transport stream containing PID data packets of a plurality of service channels in a time-division manner;
   adding a time stamp corresponding to a time of the input to PID packets remaining after the PID data packets of the service channels that are not selected of the input transport stream are removed; and
   successively transmitting each of the PID packets to which the time stamp is added to an external device.
(8)
   A program causing a computer to function as:
   a stream input means that inputs a transport stream containing PID data packets of a plurality of service channels in a time-division manner;
   an information addition means that adds a time stamp corresponding to a time of the input to PID packets remaining after the PID data packets of the service channels that are not selected of the input transport stream are removed; and
   a stream transmitting means that successively transmits each of the PID packets to which the time stamp is added to an external device.
(9)
   A receiving apparatus including:
   a stream receiving unit that successively receives each PID packet to which a time stamp indicating an original time position in a transport stream is added from an external device; and
   a stream reconfiguration unit that reconfigures the transport stream by arranging each of the received PID packets in a time position in accordance with the added time stamp.
(10)
   The receiving apparatus according to (9),
   wherein the stream reconfiguration unit further inserts a pseudo-PID packet that is distinguished from the PID packet by a packet identifier into the time position where the PID packet is not present of the reconfigured transport stream.
(11)
   The receiving apparatus according to (9) or (10),
   wherein the stream receiving unit receives each of the PID packets from the external device via a digital interface.
(12)
   The receiving apparatus according to (11),
   wherein the digital interface is a DVB-CI common interface, and
   wherein the external device is a conditional access module that performs de-scramble processing.
(13)
   The receiving apparatus according to any one of (9) to (12),
   wherein the stream receiving unit successively receives each of the PID packets to which a stream identifier that identifies the corresponding transport stream and the time stamp are added from the external device, and
   wherein the stream reconfiguration unit distributes each of the received PID packets to each stream in accordance with the added stream identifier and arranges each of the PID packets in a time position in accordance with the time stamp added in each of the streams to reconfigure a plurality of the transport streams.
(14)
   A receiving method including:
   successively receiving each PID packet to which a time stamp indicating an original time position in a transport stream is added from an external device; and
   reconfiguring the transport stream by arranging each of the received PID packets in a time position in accordance with the added time stamp.
(15)
   A program causing a computer to function as:
   a stream receiving means that successively receives each PID packet to which a time stamp indicating an original time position in a transport stream is added from an external device; and
   a stream reconfiguration means that reconfigures the transport stream by arranging each of the received PID packets in a time position in accordance with the added time stamp.
(16)
   An electronic device including:
   a transmitting apparatus; and
   a receiving apparatus,
   wherein the transmitting apparatus includes
   a stream input unit that inputs a plurality of transport streams,
   an information addition unit that adds, to PID packets remaining after PID data packets of service channels that are not selected () of each of the plurality of transport streams that have been input are removed, a stream identifier that identifies the corresponding transport stream and a time stamp corresponding to a time of the input, and
   a stream transmitting unit that transmits each of the PID packets to which the stream identifier and the time stamp are added to an external device via a digital interface, and
   wherein the receiving apparatus includes
   a stream receiving unit that successively receives each of the PID packets to which the stream identifier and the time stamp are added from the external device, and
   wherein a stream reconfiguration unit that reconfigures the plurality of transport streams by distributing each of the received PID packets to each stream in accordance with the added stream identifier and arranging each of the PID packets in a time position in accordance with the time stamp added in the each stream.

### Reference Signs List

- 10: receiving system
- 100: host device
- 101: microprocessor
- 102-1 to 102-3: tuner
- 103-1 to 103-3: demodulator
- 104: common interface controller
- 105-1 to 105-3: demultiplexer
- 106-1 to 106-3: MPEG decoder
- 141-1 to 141-3: input buffer
- 142-1 to 142-3: dual port memory
- 143: TS re-mapper/output rate controller
- 144: TS re-construct buffer
- 145-1 to 145-3: dual port memory
- 146-1 to 146-3: PID timing adjuster
- 151: input clock generator
- 152: local TS ID/time stamp adder
- 153: local TS ID controller
- 154: time stamp reader
- 200: CAM module
- 201: microprocessor
- 202: de-scrambler

## Claims

1. A transmitting apparatus comprising:
a stream input unit that inputs a transport stream containing PID data packets of a plurality of service channels in a time-division manner;
an information addition unit that adds a time stamp corresponding to a time of the input to PID packets remaining after the PID data packets of the service channels that are not selected of the input transport stream are removed; and
a stream transmitting unit that successively transmits each of the PID packets to which the time stamp is added to an external device.

2. The transmitting apparatus according to claim 1,
wherein the stream transmitting unit decides a clock rate needed for continuous transmission from a total amount of data of the PID packets to which the time stamp is added to continuously transmit each of the PID packets to the external device.

3. The transmitting apparatus according to claim 1,
wherein the stream transmitting unit further transmits, when transmitting each of the PID packets to the external device, service channel information of the PID packet to the external device.

4. The transmitting apparatus according to claim 1,
wherein the stream transmitting unit transmits each of the PID packets to the external device via a digital interface.

5. The transmitting apparatus according to claim 4,
wherein the digital interface is a DVB-CI common interface, and
wherein the external device is a conditional access module that performs de-scramble processing.

6. The transmitting apparatus according to claim 1,
wherein the stream input unit inputs a plurality of the transport streams,
wherein the information addition unit adds, to the PID packets remaining after the PID data packets of the service channels that are not selected are removed of each of the plurality of transport streams that have been input, a stream identifier that identifies the corresponding transport stream and the time stamp corresponding to the time of the input, and
wherein the stream transmitting unit successively transmits each of the PID packets to which the stream identifier and the time stamp are added to the external device.

7. A transmitting method comprising:
inputting a transport stream containing PID data packets of a plurality of service channels in a time-division manner;
adding a time stamp corresponding to a time of the input to PID packets remaining after the PID data packets of the service channels that are not selected of the input transport stream are removed; and
successively transmitting each of the PID packets to which the time stamp is added to an external device.

8. A program causing a computer to function as:
a stream input means that inputs a transport stream containing PID data packets of a plurality of service channels in a time-division manner;
an information addition means that adds a time stamp corresponding to a time of the input to PID packets remaining after the PID data packets of the service channels that are not selected of the input transport stream are removed; and
a stream transmitting means that successively transmits each of the PID packets to which the time stamp is added to an external device.

9. A receiving apparatus comprising:
a stream receiving unit that successively receives each PID packet to which a time stamp indicating an original time position in a transport stream is added from an external device; and
a stream reconfiguration unit that reconfigures the transport stream by arranging each of the received PID packets in a time position in accordance with the added time stamp.

10. The receiving apparatus according to claim 9,
wherein the stream reconfiguration unit further inserts a pseudo-PID packet that is distinguished from the PID packet by a packet identifier into the time position where the PID packet is not present of the reconfigured transport stream.

11. The receiving apparatus according to claim 9,
wherein the stream receiving unit receives each of the PID packets from the external device via a digital interface.

12. The receiving apparatus according to claim 11,
wherein the digital interface is a DVB-CI common interface, and
wherein the external device is a conditional access module that performs de-scramble processing.

13. The receiving apparatus according to claim 9,
wherein the stream receiving unit successively receives each of the PID packets to which a stream identifier that identifies the corresponding transport stream and the time stamp are added from the external device, and
wherein the stream reconfiguration unit distributes each of the received PID packets to each stream in accordance with the added stream identifier and arranges each of the PID packets in a time position in accordance with the time stamp added in each of the streams to reconfigure a plurality of the transport streams.

14. A receiving method comprising:
successively receiving each PID packet to which a time stamp indicating an original time position in a transport stream is added from an external device; and
reconfiguring the transport stream by arranging each of the received PID packets in a time position in accordance with the added time stamp.

15. A program causing a computer to function as:
a stream receiving means that successively receives each PID packet to which a time stamp indicating an original time position in a transport stream is added from an external device; and
a stream reconfiguration means that reconfigures the transport stream by arranging each of the received PID packets in a time position in accordance with the added time stamp.

16. An electronic device comprising:
a transmitting apparatus; and
a receiving apparatus,
wherein the transmitting apparatus includes
a stream input unit that inputs a plurality of transport streams,
an information addition unit that adds, to PID packets remaining after PID data packets of service channels that are not selected of each of the plurality of transport streams are removed, a stream identifier that identifies the corresponding transport stream and a time stamp corresponding to a time of the input, and
a stream transmitting unit that transmits each of the PID packets to which the stream identifier and the time stamp are added to an external device via a digital interface, and
wherein the receiving apparatus includes
a stream receiving unit that successively receives each of the PID packets to which the stream identifier and the time stamp are added from the external device, and
wherein a stream reconfiguration unit that reconfigures the plurality of transport streams by distributing each of the received PID packets to each stream in accordance with the added stream identifier and arranging each of the PID packets in a time position in accordance with the time stamp added in the each stream.
